# EUROPÄISCHE PATENTANMELDUNG

(11) **EP 0 564 690 A1**
(43) Veröffentlichungstag der Anmeldung: **13.10.1993**
(21) Anmeldenummer: 92108136.0
(22) Anmeldetag: 14.05.1992
(51) Int. Cl.: B29C 45/12, B29C 45/76

(54) **Verfahren und Vorrichtung zum automatischen Herstellen von Gegenständen aus Kunststoff, insbesondere aus Recycling-Kunststoff**

(30) Priorität: 08.04.1992 DE 4211768
(71) Anmelder: Dr. Spiess Kunststoff-Recycling GmbH & Co., D-67271 Kleinkarlbach (DE)
(72) Erfinder: Attilo, Giuseppe, W-6718 Grünstadt (DE); Rydmann, Theo, W-6719 Hettenleidelheim (DE); Schibalsky, Manfred, W-6520 Worms-Hernsheim (DE)

(57) **Zusammenfassung**

Die Erfindung behandelt die Automatisierung des Herstellungsprozesses von größeren Gegenständen aus Kunststoff, insbesondere aus verunreinigtem Recycling-Kunststoff. Von einem an einem Plastifikator (1) angeflanschten verlängerten Verteilerkopf (2) werden über je einen Absperrmechanismus (4) mehrere daran angeschlossene Formen (3) mit Schmelze (5) versorgt. Eine vorprogrammierte Steuereinrichtung (10) überwacht die Füllung der jeweiligen Form (3) über einen Sensor (9). Ist die Soll-Füllung erreicht, wird der Absperrmechanismus (4) durch die Steuereinrichtung (10) geschlossen und eine andere füllbereite Form (3) durch Öffnen des betreffenden Absperrmechanismusses (4) mit Schmelze (5) gefüllt. Die Steuereinrichtung (10) steuert außerdem noch das Nachdrücken zusätzlicher Schmelze (5) in die bereits gefüllte Form (3), setzt die Heiz-und Kühleinrichtung (12) in Gang, veranlaßt das Öffnen der Form (3) und den Ausstoß des Preßlings (8), sowie das darauffolgende Schließen der Form (3) und signalisiert deren Füllbereitschaft an die Steuereinrichtung (10).

## Beschreibung

Die Erfindung betrifft ein Verfahren und eine Vorrichtung zum automatischen Herstellen von Gegenständen aus Kunststoff, insbesondere aus verunreinigtem Recycling-Kunststoff, mit mehreren am Verteilerkopf eines Plastifikators angeflanschten, stationären Preßformen.

Die Aufbereitung des Kunststoff-Materials erfolgt in einem Plastifikator, der als Schnecken- oder Walzenextruder ausgebildet sein kann. Die aufbereitete hochviskose, zähflüssige Schmelze wird für einen Gegenstand entsprechend dessen Größe gewichtsmäßig festgelegt und in einer Form verpreßt. Bei einer anderen, dafür ausgebildeten Vorrichtung kann die Schmelze auch unmittelbar vom Plastifikator in eine Form gefüllt werden, wobei ein Sensor den Fülldruck messen kann, um so zu gewährleisten, daß die Form auch ausgefüllt ist.

Um den Plastifikator kontinuierlich arbeiten zu lassen, ist ein Verteilerkopf bekannt, an welchen mehrere Formen angeschlossen sind, welche durch einen Absperrmechanismus zu bzw. abgeschaltet werden. Trotzdem sind noch eine ganze Reihe Arbeitsabläufe notwendig, die von Hand aus ausgeführt werden müssen und somit kostenintensiv anfallen.

Aufgabe der Erfindung ist es, alle Arbeitsabläufe von der Aufbereitung des Kunststoff-Materials durch den Plastifikator bis zum fertigen, ausgeformten Gegenstand automatisch ablaufen zu lassen, um durch rationelle Auslastung der Vorrichtung preiswerte Gegenstände zu erzeugen.

Diese Aufgabe wird durch folgende Verfahrenschritte gelöst:
a) Formfreigabe und Anzeige der Füllbereitschaft,
b) Öffnen des der Form zugeordneten Absperrmechanismusses am Verteilerkopf,
c) Füllen der Form und nachfüllen der Kolbeneinrichtung, Anzeige durch Fülldrucküberwachung,
d) Schließen des Absperrmechanismusses am Verteilerkopf,
e) Nachdrücken von zusätzlicher Schmelze in die Form durch die Kolbeneinrichtung,
f) Abkühlen der Form,
g) Öffnen des Formdeckels und Entfernen des Preßlings.
h) Schließen des Formdeckels und einschalten der Heizeinrichtung für die Form.

An einem, vorzugsweise am Plastifikator angeflanschten Verteilerkopf können mehrere stationäre Formen angeschlossen sein, wobei zwischen Verteilerkopf und Form ein Absperrmechanismus zwischengeschaltet ist.

Die Formfreigabe und die Füllbereitschaft kann durch einen Sensor erfolgen, welcher das Öffnen des mit der Form verbundenen Absperrmechanismusses veranlaßt. Die Schmelze kann nun vom Verteilerkopf unmittelbar in die betreffende Form einfließen. Eine entgegengesetzt zur Einflußöffnung der Form angeordnete Kolbeneinrichtung kann sich im Anschluß an die Füllung der Form gleichfalls auffüllen. Ein Sensor kann den Fülldruck überwachen und das Schließen des Absperrmechanismusses veranlassen, sobald der Solldruck erreicht ist. Gleichzeitig wird aber auch ein anderer Absperrmechanismus zu einer anderen Form am Verteilerkopf geöffnet, so daß im kontinuierlichen Schmelzausstoß des Plastifikators keine Stockung eintreten kann.

Sobald der Absperrmechanismus zur letzteren, bereits gefüllten Form geschlossen ist, kann durch einen Sensor das zusätzliche Nachdrücken von Schmelze durch die Kolbeneinrichtung erfolgen. Das Nachdrucken von Schmelze in eine bereits gefüllte Form hat den Vorteil, daß auch komplizierte Formen einwandfrei gefüllt werden, z. B. Formen, die leicht Lunkerstellen oder anderweitig nicht vollständig ausgefüllte Konturen der Gegenstände aufweisen. Die Ausschußquote reduziert sich erheblich.

Ferner kann das Einschalten der Kühleinrichtung für die Form durch ein Signal des Sensors durchgeführt werden. Durch Kühlen der Form kann dieselbe eher entleert werden. Abkühlen und Zwischenheizen der Form kann durch Umschalten der betreffenden Einrichtungen mehrmals hintereinander erfolgen. Dies hat den Vorteil, daß das Entformen leichter und einfacher durchführbar ist.

Darüber hinaus kann das Öffnen der Form innerhalb eines vorbestimmten Zeitintervalls durch eine Steuereinrichtung durchgeführt und gleichzeitig die Entfernung des Preßlings aus der Form vorgenommen werden.

Der Preßling kann auf ein nicht gezeichnetes Förderband ausgestoßen und abtransprotiert werden.

Außerdem kann das Schließen des Formdeckels und das Zwischenheizen der Form durch ein Signal der Steuereinrichtung veranlaßt werden.Ein Sensor kann die Füllbereitschaft der entleerten Form signalisieren.

Die Vorrichtung zur Durchführung des Verfahrens besteht aus einem Plastifikator, einem Verteilerkopf mit mehreren verriegelbaren Ausmündungen zu den einzelnen Formen, mit je einer Nachdruckeinrichtung zum Nachfüllen von zusätzlicher Schmelze zu den einzelnen Formen.
a) Der Verteilerkopf kann strangartig verlängert sein,
b) Die Zwischenstücke zwischen den Ausmündungen können mit einer Zusatzheizung beheizbar sein und
c) Der Plastifikator kann als Schneckenextruder oder als Walzenextruder ausgebildet sein.

Dadurch ist die Möglichkeit gegeben, die aufbereitete Schmelze auch über eine längere Strecke zu den einzelnen Formen zu transportieren und somit eine Vielzahl von Formen an einem Verteilerkopf anzuschließen.

Ferner kann zwischen dem Plastifikator und dem Verteilerkopf eine Schmelzförderpumpe zwischengeschaltet sein. Da zum vollkommenen Ausfüllen der Form mit Schmelze bei einem strangartig verlängerten Verteilerkopf mit mehreren daran angeflanschten einzelnen Formen mitunter ein Druck von etwa 400 bar erforderlich ist, kann die Schmelzförderpumpe als Zahnradpumpe ausgebildet sein. Am Ende des strangartig verlängerten Verteilerkopfes ist zur Formfüllung noch ein Druck von etwa 100 bar erforderlich. Das Ende des Verteilerkopfes kann mit einem Absperrmechanismus verschlossen sein, welcher bei Bedarf auf Durchlaß umgeschaltet werden kann, falls im Produktionsablauf eine Störung eintreten sollte.

Darüber hinaus kann der Absperrmechanismus als elektrisch betätigter Drehschieber ausgebildet sein; er kann aber auch als Nadelverschlußdüse ausgebildet sein. Diese beiden Verschlüsse haben sich in der Praxis bewährt. Der Absperrmechanismus kann aber auch als Absperrschieber ausgebildet sein, welcher elektrisch oder hydraulisch betätigbar ist.

Außerdem können die Formen mit dem dazugehörenden Absperrmechanismus eine Einheit bilden und am strangartigen Verteilerkopf angeflanscht sein. Dadurch ist eine kompakte Bauweise erzielbar.

In vorteilhafter Ausgestaltung der Erfindung kann an jeder Form eine Kolbeneinrichtung zum Nachdrücken von zusätzlicher Schmelze in die Form angeordnet sein. Diese Kolbeneinrichtung ist diametral zur Einlaßöffnung für die Schmelze an jeder Form angeordnet und dient dazu, daß nach Erreichen des Soll-Fülldruckes in der Form und anschließend geschlossenem Absperrmechanismus zusätzlich eine vorbestimmte Menge Schmelze in die Form hineingedrückt wird, um eventuelle Lunkerstellen oder unvollkommen ausgefüllte Konturen des Preßlings, inbesondere bei größeren und komplizierten Formen, auszugleichen bzw. zu vervolkommnen. Die Kolbeneinrichtung füllt sich mit durch die Form hindurchgeflossener Schmelze und wird durch einen Sensor veranlaßt, diese Schmelze rückführend wieder in die Form hineinzupressen.

Ferner kann an jeder Form eine steuerbare Heiz-und Kühleinrichtung angeschlossen sein. Diese Einrichtung wird während des Abkühlprozesses öfters zu-und umgeschaltet. Es wird dadurch nicht nur der Abkühlungsprozeß beschleunigt, sondern die Entformung wird dadurch erheblich erleichtert.

Außerdem können die Zwischenstücke zwischen den Ausmündungen am Verteilerkopf je eine Zusatzheizung aufweisen. Dadurch werden Wärmeverluste beim Durchfluß durch den strangartig verlängerten Verteilerkopf bis zu den am Ende desselben angeordneten Formen, ausgeglichen.

Außerdem können die Formen mit einem Sensor ausgestattet sein, welcher beim Erreichen des Solldruckes in der Form den Absperrmechanismus schließt.

Für jede Form kann eine Steuereinrichtung angeordnet sein, die das Nachdrücken von zusätzlicher Schmelze in die bereits gefüllte Form veranlaßt.

Darüber hinaus kann die Steuereinrichtung die Heizeinrichtung zeitlich versetzt auf Abkühlen umschalten und nach einem bestimmten Zeitintervall das Öffnen des Formdeckels und das Entfernen des Preßlings aus der Form veranlassen. Die Preßlinge können hierbei auf ein Förderband ausgestoßen oder manuell entfernt werden.

Darüber hinaus kann die Steuereinrichtung das Schließen des Formdeckels veranlassen. Das Öffnen und Schließen des Formdeckels kann hydraulisch und/oder mit Hilfe eines Kniegelenkes erfolgen.

Ferner kann die Steuereinrichtung die Freigabe der geschlossenen Form an den Absperrmechanismus signalisieren. Durch einen vorprogrammierten Steuerungsablauf kann nun die entleerte und geschlossene Form wieder in den Arbeitszyklus mit eingeschlossen werden. Die automatische Sensorüberwachung meldet der Steuereinrichtung, wo eine Form zum Befüllen frei ist. Die Formen können für sich verschieden ausgelegt sein und der Plastifikator sollte eine Leistung von etwa 200 bis 250 kg/h haben.
Eine andere Vorrichtung zur Durchführung des Verfahrens besteht aus einem Plastifikator, einem Verteilerkopf mit mehreren verriegelbaren Ausmündungen zu den einzelnen Formen, die mit je einer Heiz- und Kühleinrichtung und je einer Nachdruckeinrichtung zum Nachfüllen von zusätzlicher Schmelze zu den einzelnen Formen ausgestattet sind.
Um die Länge der Vorrichtung zu reduzieren und um ein Abkühlen der Schmelze in einem allzu langgestreckten Verteilerkopf zu vermeiden, kann der Verteilerkopf, insbesondere bei kleineren Einzelformen, kreisförmig ausgebildet sein, wobei die Formen mit dem Absperrmechanismus sternförmig am Verteilerkopf angeflanscht sind.

An Hand von in der Zeichnung dargestellten Ausführungsbeispielen soll die Erfindung näher erläutert werden.

Es zeigen:
- Fig. 1: eine Draufsicht auf eine Vorrichtung mit strangartig verlängertem Verteilerkopf,
- Fig. 2: ein Schaltschema einer Vorrichtung,
- Fig. 3: eine Preßform im geschlossenen Zustand,
- Fig. 4: eine Preßform im geöffneten Zustand,
- Fig. 5: eine Vorrichtung mit einem kreisförmigen Verteilerkopf und sternförmig daran angeflanschten Formen und Absperrmechanismen.

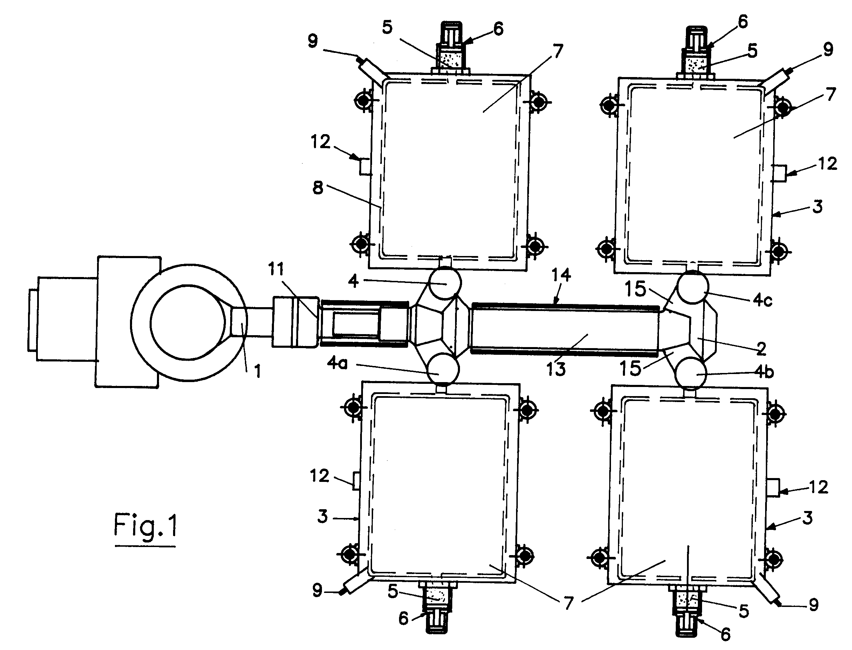

Wie in der Fig. 1 dargestellt, besteht die Vorrichtung aus einem Plastifikator 1, an welchem ein strangartiger, verlängerter Verteilerkopf 2 angeflanscht ist. Als Plastifikator 1 kann ein Schneckenextruder oder ein Walzenextruder genommen werden. Am verlängerten Verteilerkopf 2 sind über einen Absperrmechanismus 4 die Formen 3 angeschlossen. Bei einem geöffneten Absperrmechanismus 4 gelangt die Schmelze 5 in die betreffende Form 3, durchfließt dieselbe und gelangt in die Kolbeneinrichtung 6, die diametral zur Einflußöffnung der Form angeordnet ist. Beim Erreichen des Soll-Fulldruckes signalisiert der Sensor 9, daß die Füllung der Form 3 erreicht ist und der Absperrmachanismus 4 wird durch die Steuerungseinrichtung 10 geschlossen. Unmittelbar nach dem Schließen des Absperrmechanismusses 4 bewirkt die Steuereinrichtung 10, daß die Kolbeneinrichtung 6 die gespeicherte Schmelze 5 zusätzlich in die bereits gefüllte Form 3 hineindrückt. Jede Form 3 ist mit einer Heiz- und Kühleinrichtung 12 ausgestattet. Diese Heiz- und Kühleinrichtung 12 ist umschaltbar konzipiert, d.h. sie kann sowohl als Heizeinrichtung als auch als Kühleinrichtung 12 fungieren.

Sobald die Form 3 gefüllt und der Absperrmechanismus 4 geschlossen ist wird wechselweise die Kühl- als auch die Heizeinrichtung 12 eingeschaltet. Dieser Wechsel bewirkt, daß sich der Preßling 8 leichter entformen läßt. Sobald die Form 3 nach einem bestimmten Zeitintervall abgekühlt ist, bewirkt die Steuereinrichtung 10 das Öffnen des Formendeckels 7, worauf der Preßling 8 ausgestoßen wird. Dieser kann manuell entnommen oder einem Förderband zugeführt werden.

Sobald der Absperrmechanismus 4 zu einer Form 3 geschlossen wird, öffnet ein anderer Absperrmechanismus 4a-c, so daß die Schmelze 5 einer anderen Form 3 zugeleitet werden kann. Die Zwischenstücke 13 können durch eine Zusatzheizung 14 beheizt werden, damit kein Wärmeverlust der Schmelze 5 eintreten kann, ehe die am Ende des strangartig verlängerten Verteilerkopfes 4 angeordneten Formen 3 befüllt werden. Jede der Formen 3 kann anders ausgelegt sein, die Vorrichtung kann verschiedene Preßlinge bringen.

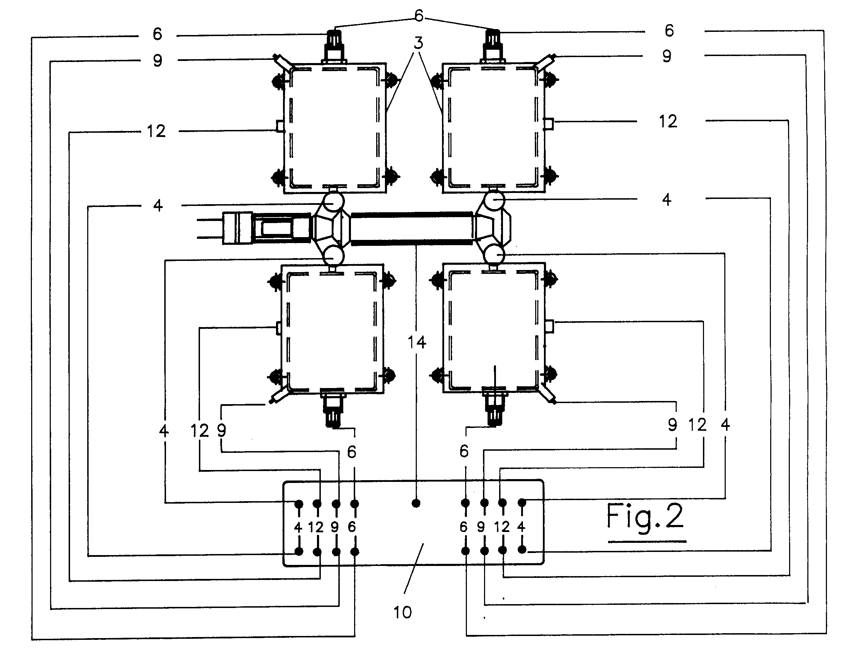

Das Schaltschema Fig. 2 zeigt eine Steuereinrichtung 10, welche den Absperrmechanismus 4 zu den Formen 3 steuert. Eine weitere steuerbare Verbindung ist mit der Heiz- und Kühleinrichtung 12 verbunden und steuert nach einem vorbestimmten Zeitintervall das Beheizen und Abkühlen der Formen 3. Des weiteren ist die Steuereinrichtung 10 mit einem Sensor 9 verbunden, welcher einerseits den Fülldruck in der Form 3 mißt und andererseits mit dem Absperrmechanismus 4 in Verbindung steht und denselben schließt, sobald der Soll-Fülldruck in der Form 3 erreicht ist. Der Sensor 9 signalisiert auch das Öffnen des Formendeckels 7, die Entnahme des Preßlings 8,das Schließen des Formendeckels 7 und die Füllbereitschaft. Die Kolbeneinrichtung 6 wird programmgemäß in Tätigkeit gesetzt, sobald der Soll-Fülldruck erreicht ist und der Absperrmechanismus zu der betreffenden Form 3 geschlossen ist.

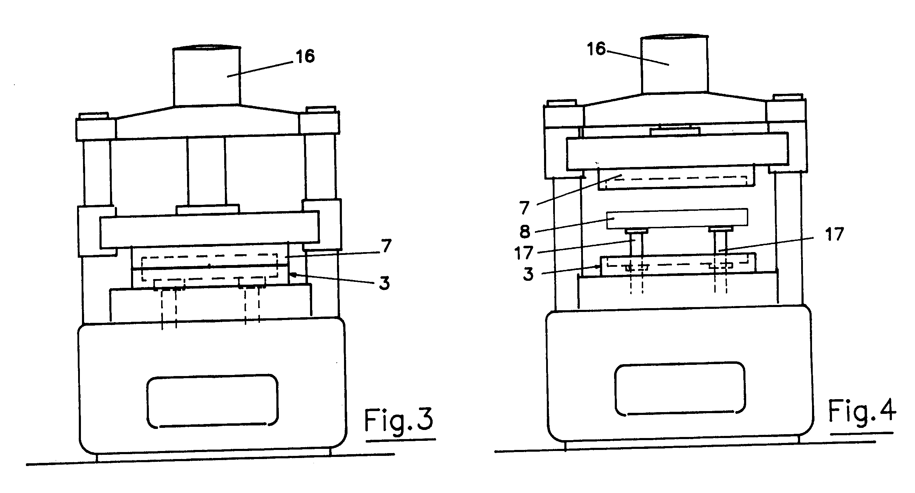

Die Fig. 3 zeigt eine geschlossene Form 3. Der Formendeckel 7 wird durch eine Hydraulikeinrichtung 16 in Füllstellung gehalten.

Die Fig. 4 zeigt eine Form 3 in Offenstellung. Die Stößel 17 haben den fertiggestellten Preßling 8 aus dem Formenunterteil 18 entnommen. Der Preßling 8 kann nun manuell entfernt werden,er kann aber auch durch eine nicht gezeichnete Einrichtung auf ein Förderband gestoßen werden.

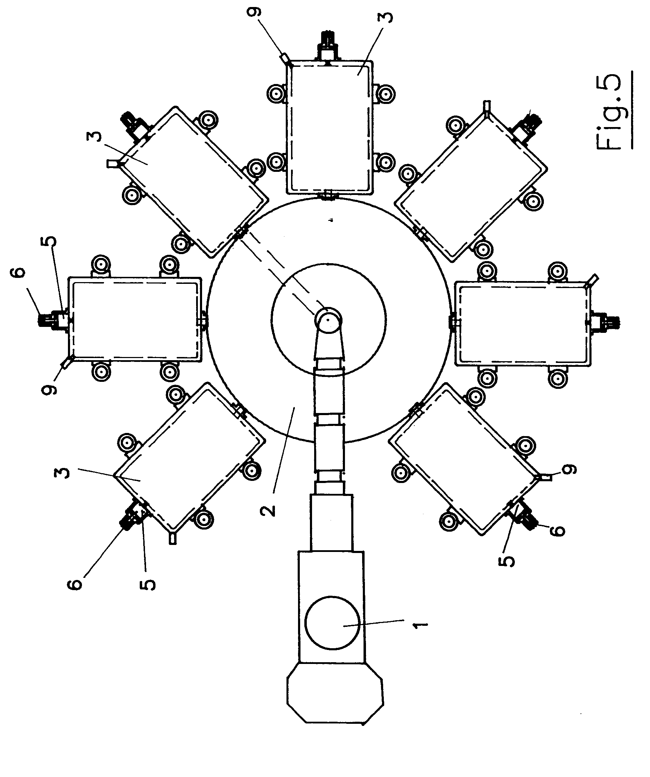

Die Fig. 5 zeigt einen anderen Aufbau des Verteilerkopfes 2. Dieser ist kreisförmig ausgebildet und die Ausmündungen 15 bzw. die angeflanschten Absperrmechanismen 4 mit den Formen 3 sind sternförmig dazu angeordnet. Dies hat den Vorteil einer kompakten Ausführung und daß die Schmelze 5 nicht so rasch an Wärme verliert. Eine Zusatzheizung 14 ist hier kaum erforderlich. Die Ausstattung der Formen 3 und deren Steuerung ist bereits in Fig. 2 dargestellt und beschrieben. Diese Anordnung ist bei kleineren, komplizierten Formen 3 von Vorteil.

Selbstverständlich kann die Betätigung des Formendeckels 7 auch über ein elektrisch, pneumatisch oder hydraulisch gesteuertes Kniegelenk erfolgen, so dies zweckmäßig ist.

## Patentansprüche

**1.** Verfahren zum automatischen Herstellen von Gegenständen aus Kunststoff, insbesondere aus Recyclingkunststoff, mit mehreren am Verteilerkopf eines Plastifikators angeflanschten, stationären Preßformen, gekennzeichnet durch folgende Verfahrensschritte:
a) Formfreigabe und Anzeige der Füllbereitschaft,
b) Öffnen des der Form (3) zugeordneten Absperrmechanismusses (4) am Verteilerkopf (2),
c) Füllen der Form (3) und nachfüllen der Kolbeneinrichtung (6), Anzeige durch Fülldrucküberwachung,
d) Schließen des Absperrmechanismusses (4) am Verteilerkopf (2)
e) Nachdrücken von zusätzlicher Schmelze (5) in die Form (3) durch die Kolbeneinrichtung (6),
f) Abkühlen der Form (3),
g) Öffnen des Formendeckels (7) und Entfernen des Preßlings (8), h) Schließen des Formendeckels (7) und einschalten der Heizeinrichtung (12) für die Form (3).

**2.** Verfahren nach Anspruch 1, dadurch gekennzeichnet, daß die Füllbereitschaft der Form (3) durch einen mit dieser verbundenen Sensor (9) veranlaßt wird.

**3.** Verfahren nach Anspruch 2, dadurch gekennzeichnet, daß durch das Signal des Sensors (9) der Absperrmechanismus (4) am Verteilerkopf (2) geöffnet wird.

**4.** Verfahren nach Anspruch 3, dadurch gekennzeichnet, daß das Füllen der Form (3) und das Nachfüllen der Kolbeneinrichtung (6) vom Sensor (9) durch Fülldruckmessung überwacht wird.

**5.** Verfahren nach Anspruch 4, dadurch gekennzeichnet, daß das Schließen des Absperrmechanismusses (4) am Verteilerkopf (2) durch ein Signal des Sensors (9) veranlaßt wird.

**6.** Verfahren nach Anspruch 5, dadurch gekennzeichnet, daß das Nachdrücken von zusätzlicher Schmelze (5) in die Form (3) durch den Sensor (9) veranlaßt wird.

**7.** Verfahren nach Anspruch 6, dadurch gekennzeichnet, daß das Einschalten der Kühleinrichtung (12) für die Form (3) durch ein Signal des Sensors (9) durchgeführt wird.

**8.** Verfahren nach Anspruch 7, dadurch gekennzeichnet, daß das Öffnen der Form (3) innerhalb eines vorbestimmten Zeitintervalls durch eine Steuereinrichtung (10) durchgeführt und gleichzeitig die Entfernung des Preßlings (8) aus der Form (3) vorgenommen wird.

**9.** Verfahren nach Anspruch 8, dadurch gekennzeichnet, daß das Schließen des Formdeckels (7) und das Zwischenheizen der Form (3) durch ein Signal derSteuereinrichtung (10) veranlaßt wird.

**10.** Vorrichtung zur Durchführung des Verfahrens, mit einem Plastifikator, einem Verteilerkopf mit mehreren verriegelbaren Ausmündungen zu den einzelnen Formen,mit je einer Nachdruckeinrichtung zum Nachfüllen von zusätzlicher Schmelze zu den einzelnen Formen,
dadurch gekennzeichnet,daß
a) Der Verteilerkopf 4) strangartig verlängert ist,
b) Die Zwischenstücke (13) zwischen den Ausmündungen (15) mit einer Zusatzheizung (14) beheizbar sind.
c) Der Plastifikator (1) als Schneckenextruder oder als Walzenextruder ausgebildet ist.

**12.** Vorrichtung nach Anspruch 11, dadurch gekennzeichnet, daß zwischen dem Plastifikator (1) und dem Verteilerkopf (2) eine Schmelzförderpumpe (11) zwischengeschaltet ist.

**13.** Vorrichtung nach Anspruch 12, dadurch gekennzeichnet, daß der Absperrmechanismus (4) als elektrisch betätigter Drehschieber ausgebildet ist.

**14.** Vorrichtung nach Anspruch 13, dadurch gekennzeichnet, daß der Absperrmechanismus (4) als Nadelverschlußdüse ausgebildet ist.

**15.** Vorrichtung nach Anspruch 13, dadurch gekennzeichnet, daß der Absperrmechanismus (4) als Absperrschieber ausgebildet ist.

**16.** Vorrichtung nach einem der Ansprüche 13 bis 15, dadurch gekennzeichnet, daß die Formen (3) mit dem dazugehörenden Absperrmechanismus (4) eine Einheit bilden und am strangartigen Verteilerkopf (2) angeflanscht sind.

**17.** Vorrichtung nach Anspruch 16, dadurch gekennzeichnet, daß an jeder Form (3) eine Kolbeneinrichtung (6) zum Nachdrücken von zusätzlicher Schmelze (5) in die Form (3) angeordnet ist.

**18.** Vorrichtung nach Anspruch 17, dadurch gekennzeichnet, daß an jeder Form (3) eine steuerbare Heiz- und Kühleinrichtung (12) angeschlossen ist.

**19.** Vorrichtung nach Anspruch 18, dadurch gekennzeichnet, daß die Zwischenstücke (13) zwischen den Ausmündungen am Verteilerkopf (2) je eine Zusatzheizung (14) aufweisen.

**20.** Vorrichtung nach Anspruch 19, dadurch gekennzeichnet, daß die Formen (3) mit einem Sensor (9) ausgestattet sind.

**21.** Vorrichtung nach Anspruch 20, dadurch gekennzeichnet, daß der Sensor (9) bei Erreichen des Solldruckes in der Form (3) den Absperrmechanismus (4) schließt.

**22.** Vorrichtung nach Anspruch 21, dadurch gekennzeichnet, daß eine Steuereinrichtung (10) das Nachdrücken von zusätzlicher Schmelze (5) in die bereits gefüllte Form (3) veranlaßt.

**23.** Vorrichtung nach Anspruch 22, dadurch gekennzeichnet, daß die Steuereinrichtung (10) die Heizeinrichtung (12) zeitlich versetzt auf Abkühlen umschaltet.

**24.** Vorrichtung nach Anspruch 23, dadurch gekennzeichnet, daß die Steuereinrichtung (10) nach einem bestimmten Zeitintervall das Entfernen des Preßlings (8) aus der Form (3) veranlaßt.

**25.** Vorrichtung nach Anspruch 24, dadurch gekennzeichnet, daß die Steuereinrichtung (10) das Schließen des Formdeckels (7) veranlaßt.

**26.** Vorrichtung nach Anspruch 25, dadurch gekennzeichnet, daß das Schließen des Formdeckels (7) hydraulisch erfolgt.

**27.** Vorrichtung nach Anspruch 25, dadurch gekennzeichnet, daß das Schließen des Formdeckels (7) durch ein Kniegelenk erfolgt.

**28.** Vorrichtung nach einem der Ansprüche 26 oder 27, dadurch gekennzeichnet, daß die Steuereinrichtung (10) die Freigabe der geschlossenen Form (3) an den Absperrmechanismus (4) signalisiert.

**29.** Vorrichtung zur Durchführung des Verfahrens, mit einem Plastifikator, einem Verteilerkopf mit mehreren verriegelbaren Ausmündungen zu den einzelnen Formen, die mit je einer Heiz- und Kühleinrichtung und je einer Nachdruckeinrichtung zum Nachfüllen von zusätzlicher Schmelze zu den einzelnen Formen ausgestattet sind,
dadurch gekennzeichnet, daß
a) der Verteilerkopf (2) kreisförmig ausgebildet ist,
b) Die Formen (3) mit den Absperrmechanismen (4) sternförmig am Verteilerkopf (2) angeflanscht sind.
